Europäisches Patentamt

European Patent Office

Office européen des brevets

(19)

(11) Veröffentlichungsnummer : **0 171 612**
**B1**

(12) EUROPÄISCHE PATENTSCHRIFT

(45) Veröffentlichungstag der Patentschrift :
25.05.88

(51) Int. Cl.⁴ : **G 01 B 11/26**

(21) Anmeldenummer : 85108709.8

(22) Anmeldetag : 12.07.85

(54) Lagemesseinrichtung.

(30) Priorität : 11.08.84 DE 3429648

(43) Veröffentlichungstag der Anmeldung :
19.02.86 Patentblatt 86/08

(45) Bekanntmachung des Hinweises auf die Patenterteilung : 25.05.88 Patentblatt 88/21

(84) Benannte Vertragsstaaten :
AT CH DE FR GB IT LI NL SE

(56) Entgegenhaltungen :
US-A- 3 693 024
US-A- 4 266 125
US-A- 4 319 134

(73) Patentinhaber : Dr. Johannes Heidenhain GmbH
Nansenstrasse 17
D-8225 Traunreut (DE)

(72) Erfinder : Ernst, Alfons, Dipl.-Ing.
Traunring 62
D-8225 Traunreut (DE)

**Beschreibung**

Die Erfindung bezieht sich auf eine Lagemeßeinrichtung gemäß dem Oberbegriff des Anspruchs 1.

Aus einer Vielzahl von Druckschriften ist es bekannt, bei Winkelmeßeinrichtungen die Winkelteilungen auf mehrere Maßverkörperungen codiert aufzubringen und mittels Getrieben aneinander zu koppeln. Als Beispiel sei die DD-PS 89 729 genannt, aber auch die DE-OS 32 43 956 zeigt eine derartige Lagemeßeinrichtung. Dort sind für die einzelnen Maßverkörperungen jeweils eigene Ablesevorrichtungen vorgesehen. Die Lagemeßeinrichtungen werden mehrstufig ausgeführt, um den Meßbereich zu vergrößern. Ferner sind inkrementale Winkelmeßeinrichtungen bekannt, bei denen die Teilung in Form eines konzentrischen Gitters auf einer Maßverkörperung aufgebracht ist. Die Messung erfolgt dort durch Aufsummieren der abgetasteten Teilungsintervalle. Bei inkrementalen Winkelmeßeinrichtungen ist der Meßbereich praktisch unbegrenzt, da die Teilung nicht endlich ist. Allerdings kann durch einen einmal pro Umdrehung von der Referenzmarke abgeleiteten Referenzimpuls die Position eines spindelgetriebenen Maschinenschlittens nach Netzausfall nicht ohne weiteres ermittelt werden. Der Maschinenschlitten muß bis zu einer auf andere Weise besonders gekennzeichneten Position verfahren werden (Ztschr. KEM, Okt. 1983, Seite 109). Dies ist umständlich und zeitraubend.

Der Erfindung liegt die Aufgabe zugrunde, die Nachteile der absoluten und der inkrementalen Meßeinrichtungen zu vermeiden und eine Meßrichtung zu schaffen, die die Vorteile beider Prinzipien vereinigt, die kostengünstig herstellbar ist und die eine möglichst einfache Bestimmung der absoluten Position innerhalb von i × 360° erlaut.

Diese Aufgabe wird durch die Merkmale des Anspruchs 1 gelöst.

Die Vorteile der erfindungsgemäßen Lagemeßeinrichtung liegen darin, daß für die Bestimmung der absoluten Position lediglich eine Bewegung innerhalb 360° erforderlich ist, wobei für die Ermittlung des Codewertes nur ein Fotoelement und auch nur ein Signalkanal erforderlich ist.

Mit Hilfe der Zeichnungen soll anhand von Ausführungsbeispielen die Erfindung noch näher erläutert werden.

Es zeigen

Figur 1 eine Winkelmeßeinrichtung im Schnitt

Figur 2a einen Trägerkörper mit Inkrementalteilung

Figur 2b eine Abtastplatte

Figur 2c einen Trägerkörper mit codierter Teilung

Figur 3 eine variierte Winkelmeßeinrichtung.

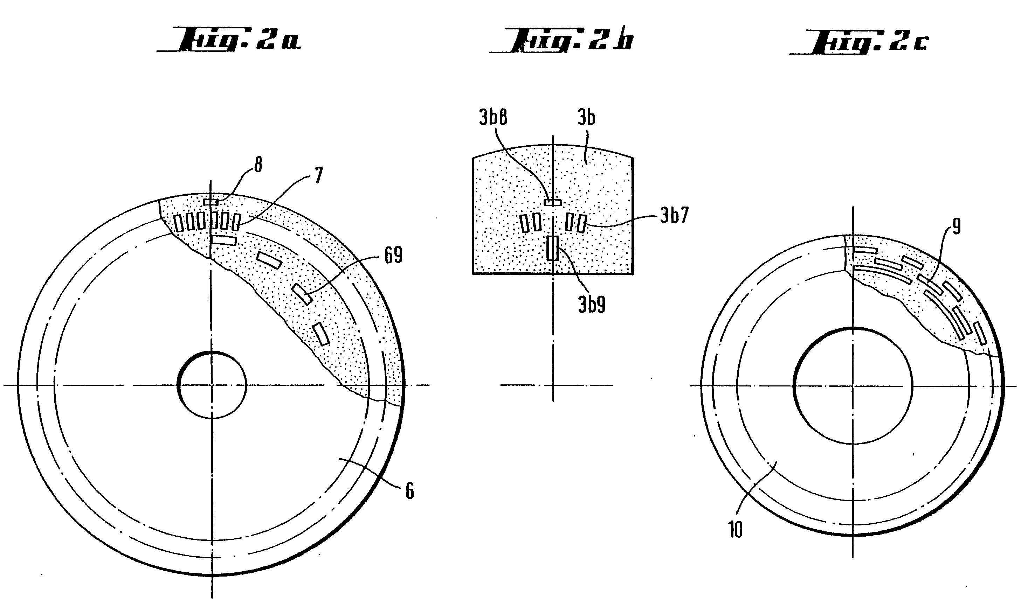

Eine Winkelmeßeinrichtung 1 weist einen Stator 2 auf, der als Gehäuse ausgebildet ist. Der Stator 2 enthält eine Abtasteinrichtung 3, die aus einer Beleuchtungseinheit 3a, einer Abtastplatte 3b und einer Fotoelementenplatine 3c besteht, auf der die Fotoelemente 3d angeordnet sind, und von der aus eine elektrische Verbindung 4 zum nicht dargestellten Auswertegerät besteht. Auf einer im Stator 2 gelagerten Welle 5 ist ein Trägerkörper 6 befestigt, der in herkömmlicher Weise eine inkrementale Meßteilung 7 trägt, wie in Figur 2a erkennbar ist. Die inkrementale Meßteilung 7 ist dort nur ausschnittsweise gezeigt. Ferner trägt der Trägerkörper 6 eine Referenzmarke 8, die in herkömmlicher Weise aus einer Gruppe von Strichen besteht, was hier nicht gezeigt ist.

Wird die Welle 5 gedreht, so bewegt sich die inkrementale Meßteilung 7 und wird in der Abtasteinrichtung 3 von zugehörigen Abtastfenstern 3b7 abgetastet, d. h., die an der Abtastplatte 3b (Figur 2b) vorbeibewegten Teilungsintervalle werden ermittelt und in dem Auswertegerät aufsummiert und angezeigt. Der Nullpunkt der Teilung 7 soll durch die Referenzmarke 8 festgelegt sein, die ebenfalls durch ein zugehöriges Abtastfenster 3b8 in der Abtastplatte 3b abgetastet wird. Die Abtastplatte 3b weist noch ein zusätzliches Abtastfenster 3b9 auf, das im Zusammenwirken mit Fenstern 69 — die sich radial und winkelversetzt zueinander auf dem Trägerkörper 6 befinden — eine codierte Teilung 9 abtastet. Die codierte Teilung 9 befindet sich auf einem zweiten Trägerkörper 10, der drehbar auf der Welle 5 gelagert ist und dem Trägerkörper 6 über ein schematisch gezeigtes Getriebe 11 nachgeschaltet ist. Der axiale Abstand der beiden Trägerkörper 6 und 10 sollte möglichst klein sein.

Bei einer Abtastung der inkrementalen Teilung 7, der codierten Teilung 9 und gegebenenfalls der Referenzmarke 8 fällt Licht der Beleuchtungseinheit 3a durch die Teilungen 7, 8, 69, 9 und die Fenster 3b7, 3b8, 3b9 der Abtastplatte 3b und trifft auf Fotoelemente 3d, in denen die Umwandlung in entsprechende elektrische Signale erfolgt, die im Auswertegerät zu Meßwerten weiterverarbeitet werden.

Das Besondere dieser Winkelmeßeinrichtung 1 liegt darin, daß mittels der codierten Teilung 9, die auf dem zweiten Trägerkörper 10 aufgebracht ist, die Winkelposition des ersten Trägerkörpers 6 innerhalb i × 360° absolut ermittelt werden kann. Dazu ist nur ein zusätzliches Fotoelement und nur ein zusätzlicher Signalübertragungskanal erforderlich, da die codierte Teilung 9 seriell bei Drehung der inkrementalen Teilung 7 abgelesen wird. Zu diesem Zweck sind auf dem ersten Trägerkörper 6 Fenster 69 vorgesehen, die entsprechend der Spuren der codierten Teilung 9 des zweiten Trägerkörpers 10 radial- und winkelversetzt zueinander sind. Die Fenster 69 können dabei konzentrisch oder auch spiralförmig auf dem Trägerkörper 6 angeordnet sein.

Jedesmal, wenn der erste Trägerkörper 6 eine volle Umdrehung gemacht hat, wird die Referenzmarke 8 abgetastet und die Ablesung der codierten Teilung 9 auf dem zweiten Trägerkörper 10 gestartet. Durch das Getriebe 11 wird der zweite Trägerkörper 10 um den Bruchteil einer Umdrehung kontinuierlich weitergeschaltet, während der erste Trägerkörper 6 sich einmal gedreht hat. So kann durch die Ablesung der codierten Teilung 9 immer die Anzahl der Umdrehungen absolut festgestellt werden, die der Trägerkörper 6 bereits zurückgelegt hat. Die Steuerung des Ablesetaktes erfolgt durch die Referenzmarke 8 und die inkrementale Teilung 7.

Bei Störungen braucht nur die Referenzmarke 8 überfahren zu werden, um den Nullpunkt für den momentanen Positionswert zu erhalten, der absolute Wert — festgelegt durch die Codeinformation — kann direkt abgelesen werden.

Es muß also nicht wie bei reinen Codedrehgebern der gesamte Meßbereich in Form von codierten Teilungen auf Maßverkörperungen aufgebracht werden, was bei großem Meßbereich viele Codespuren und viele Signalkanäle erfordert, wie dies bei sogenannten Multiturn-Gebern realisiert wird, sondern es muß sozusagen nur die Nummer der Umdrehungen codiert werden, wofür wesentlich weniger Codeinformationen notwendig sind.

Nach Netzausfall läßt sich mit maximal einer Umdrehung des ersten Trägerkörpers 6 die absolute Position reproduzieren, was vor allem bei der Lagemessung von Schlitten mit an der Spindel angekoppeltem Drehgeber vorteilhaft ist.

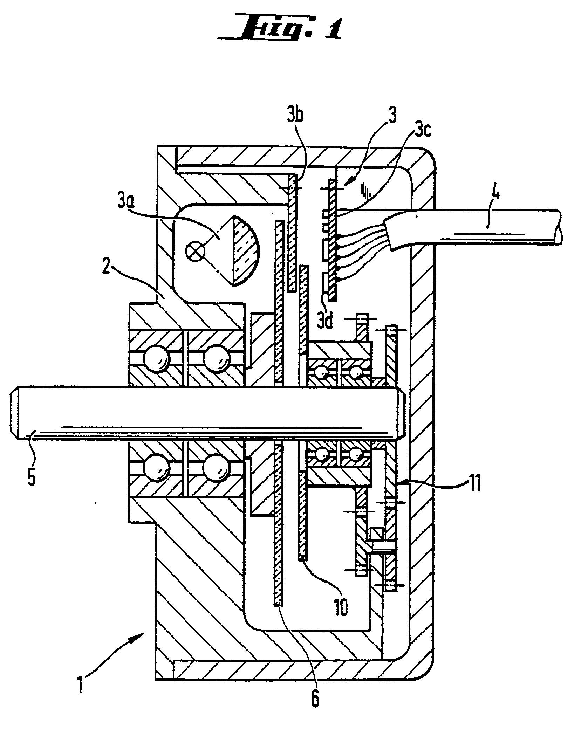

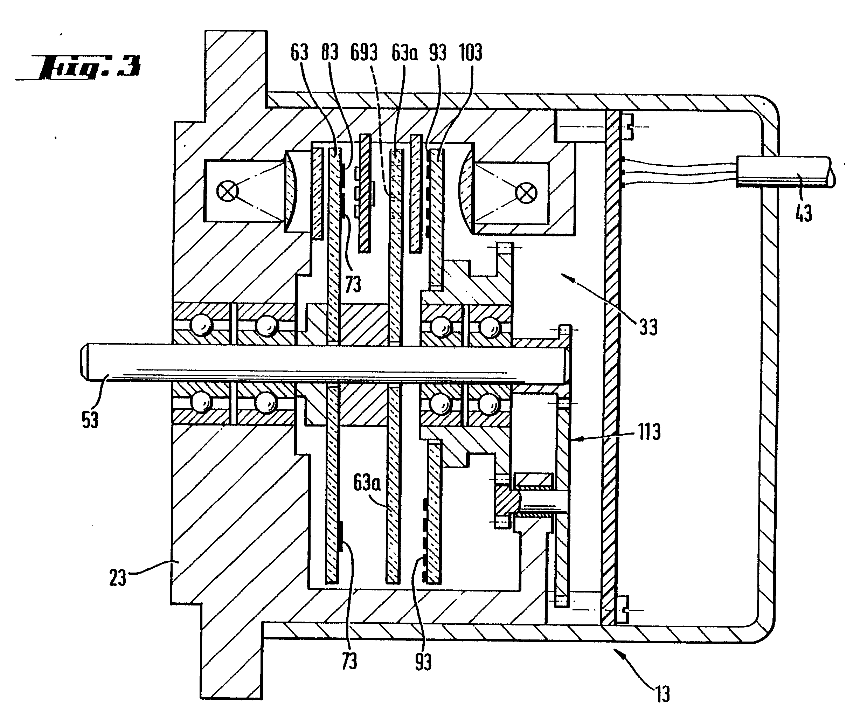

In Figur 3 ist eine Variante der Winkelmeßrichtung gemäß Figur 1 dargestellt. Hier befindet sich auf der Welle 53 außer dem Trägerkörper 63 für die Inkrementalteilung 73 und die Referenzmarke 83 und dem durch ein Untersetzungsgetriebe nachgeschalteten Trägerkörper 103 mit der codierten Teilung 93 noch ein zusätzlicher dritter Trägerkörper 63a, der die Fenster 693 für die Steuerung des Abtaststrahlenganges aufweist.

Durch diesen Trägerkörper 63a, der gleich groß ist wie der Trägerkörper 63 für die inkrementale Kreisteilung 73 und die Referenzmarke 83 steht aufgrund des größeren Radius mehr Platz zur Codierung zur Verfügung, als bei dem verbleibenden Radius auf dem Trägerkörper 63, wenn die oben genannten anderen Teilungen 73 und 83 schon aufgebracht sind.

Dem weiteren Trägerkörper 63a entsprechend ist eine andere Ausführungsform der Abtasteinrichtung 33 erforderlich, deren Einzelheiten ohne weiteres aus der Zeichnung deutlich werden. Die Ausgestaltung der Abtastplatte und der Fotoelementenplatine ist ersichtlich der Ausführungsform der Abtasteinrichtung 33 angepaßt, so daß hier nicht näher darauf eingegangen werden muß.

Auch auf eine den Figuren 2a, 2b und 2c entsprechende Abbildung des Trägerkörpers 63a mit den Fenstern 639, der Abtastplatte und dem Trägerkörper 103 mit der codierten Teilung 93 wurde verzichtet, da dies zu einer fast identischen Darstellung führen würde, wobei lediglich die Größenverhältnisse von Bedeutung wären, allenfalls noch die fehlende Inkrementalteilung und Referenzmarke auf dem Trägerkörper 63 für die Fenster 639 zur Steuerung des Abtaststrahlenganges.

Ebenso wie in Figur 1 ist ein Getriebe 113 zur Untersetzung der Umdrehungen zwischen den Trägerkörpern 63, 63a und dem Trägerkörper 103 vorgesehen.

Auf die notwendigen elektrischen Verbindungen der Bauelemente braucht hier auch nicht näher eingegangen zu werden, da dies nicht zum Verständnis der Erfindung beiträgt. Die Abtastsignale werden über Verbindungskabel 43 einem nicht gezeigten Auswertegerät zugeführt.

Es versteht sich, daß die Welle 53 in einem Stator 23 fachmännisch gelagert ist.

## Patentansprüche

1. Lagemeßeinrichtung, insbesondere Winkelmeßeinrichtung mit einem ersten Trägerkörper (6, 63) für eine inkrementale Kreisteilung (7, 73) und wenigstens eine Referenzmarke (8, 83), deren Lage zur Kreisteilung absolut festgelegt ist, wenigstens einem zweiten Trägerkörper (10, 103), der Codeinformationen in Form einer codierten Teilung (9, 93) aufweist und dem ersten Trägerkörper über ein Untersetzungsgetriebe (11, 113) nachgeschaltet ist und einer optoelektronischen Abtasteinrichtung (3, 33) zum Abtasten der Trägerkörper, dadurch gekennzeichnet, daß die inkrementale Kreisteilung (7, 73), die Referenzmarke (8, 83) des ersten Trägerkörpers (6, 63) und Fenster (69, 693) zur Steuerung des Abtaststrahlenganges zur seriellen Abtastung der Code-Informationen (9, 93) des zweiten Trägerkörpers (10, 103) eine feste Lagebeziehung zueinander aufweisen.

2. Lagemeßeinrichtung nach Anspruch 1, dadurch gekennzeichnet, daß der erste Trägerkörper (6) Fenster (69) zur Steuerung des Abtaststrahlenganges zur seriellen Abtastung der Codeinformationen (9) des zweiten Trägerkörpers (10) aufweist.

3. Lagemeßeinrichtung nach Anspruch 1, dadurch gekennzeichnet, daß auf der welle (53) des ersten Trägerkörpers (63) ein dritter Trägerkörper (63a) befestigt ist, der Fenster (639) zur Steuerung des Abtaststrahlenganges zur seriellen Abtastung der Codeinformation (93) des zweiten Trägerkörpers (103) aufweist.

4. Lagemeßeinrichtung nach Anspruch 1, dadurch gekennzeichnet, daß die Fenster (69, 693) radial- und winkelversetzt zueinander angeordnet sind.

5. Lagemeßeinrichtung nach Anspruch 1, dadurch gekennzeichnet, daß das Getriebe (11, 113) und die codierte Teilung (9, 93) so aufeinander abgestimmt sind, daß jeder mittels der Abtasteinrichtung (3, 33) ablesbaren Referenzmarke (8, 83) ein individueller Codewert zugeordnet ist.

6. Lagemeßeinrichtung nach Anspruch 1, dadurch gekennzeichnet, daß auf dem ersten Trägerkörper (6, 63) eine einzige Referenzmarke (8, 83) aufgebracht ist, die demgemäß einmal pro Umdrehung abgetastet wird, und daß nach jeder vollständigen Umdrehung des ersten Trägerkörpers (6, 63) entsprechend der Anzahl seiner Umdrehungen ein neuer Codewert (9, 93) abgetastet wird.

7. Lagemeßeinrichtung nach Anspruch 1, dadurch gekennzeichnet, daß die Abtastung der codierten Teilung (9, 93) seriell zwischen zwei Referenzmarkenabtastungen erfolgt.

8. Lagemeßeinrichtung nach Anspruch 1, dadurch gekennzeichnet, daß der Ablesetakt von Referenzmarke (8, 83) und Inkrementalteilung (7, 73) gesteuert wird.

9. Lagemeßeinrichtung nach Anspruch 1, dadurch gekennzeichnet, daß zur Abtastung der codierten Teilung (9, 93) ein Fotoelement (3d) und ein Signalkanal vorhanden sind.

## Claims

1. Positiom measuring device, in particular angle measuring device, with a first support body (6, 63) for an incremental circular scale (7, 73) and at least one reference mark (8, 83) whose position is fixed absolutely relative to the circular scale, at least one second support body (10, 103) which comprises coded information in the form of a coded scale (9, 93) and is connected to the output of the first support body by a reduction gear (11, 113), and an optoelectronic scanner (3, 33) for scanning the support bodies, characterised in that the incremental circular scale (7, 73), the reference mark (8, 83) of the first support body (6, 63) and apertures (69, 693) for controlling the path of scanning rays for serial scanning of the coded information (9, 93) of the second support body (10, 103), are fixed in position relative to each other.

2. Position measuring device according to claim 1, characterised in that the first support body (6) comprises apertures (69) for controlling the path of scanning rays for serial scanning of the coded information (9) of the second support body (10).

3. Position measuring device according to claim 1, characterised in that on the shaft (53) of the first support body (63) is mounted a third support body (63a) which comprises apertures (693) for controlling the path of scanning rays for serial scanning of the coded information (93) of the second support body (103).

4. Position measuring device according to claim 1, characterised in that the apertures (69, 693) are radially and angularly offset from each other.

5. Position measuring device according to claim 1, characterised in that the gear (11, 113) and the coded scale (9, 93) are coordinated with each other in such a way that an individual code value is assigned to each reference mark (8, 83) which can be read by means of the scanner (3, 33).

6. Position measuring device according to claim 1, characterised in that on the first support body (6, 63) is disposed a single reference mark (8, 83) which is accordingly scanned once per revolution, and after each complete revolution of the first support body (6, 63), according to the number of its revolutions a new code value (9, 93) is scanned.

7. Position measuring device according to claim 1, characterised in that the coded scale (9, 93) is scanned serially between two reference mark scans.

8. Position measuring device according to claim 1, characterised in that the scanning cycle of reference mark (8, 83) and incremental scale (7, 73) is controlled.

9. Position measuring device according to claim 1, characterised in that a photoelectric cell (3d) and a signal channel are provided for scanning the coded scale (9, 93).

## Revendications

1. Dispositif de mesure de position, en particulier dispositif de mesure d'angles comprenant un premier corps support (6, 63) pour une division circulaire incrémentale (7, 73) et au moins une marque de référence (8, 83) dont la position par rapport à la division circulaire est déterminée de façon absolue, au moins un second corps support (10, 103) qui présente des informations codées sous la forme d'une division codée (9, 93) et qui est relié au premier corps support en passant par un réducteur (11, 113), et un dispositif d'exploration opto-électronique (3, 33) pour explorer les corps supports, caractérisé par le fait que la division circulaire incrémentale (7, 73), la marque de référence (8, 83) du premier corps support (6, 63) et des fenêtres (69, 693) pour la commande de la marche du faisceau d'exploration pour l'exploration sérielle des informations codées (9, 93) du second corps support (10, 103) présentent une relation de position fixe les unes par rapport aux autres.

2. Dispositif de mesure de position suivant la revendication 1, caractérisé par le fait que le premier corps support (6) présente des fenêtres (69) pour la commande de la marche du faisceau d'exploration pour l'exploration sérielle des informations codées (9) du second corps support (10).

3. Dispositif de mesure de position suivant la revendication 1, caractérisé par le fait que sur l'arbre (53) du premier corps support (63) est fixé un troisième corps support (63a) qui présente des fenêtres (639) pour la commande de la marche du faisceau d'exploration pour l'exploration sérielle des informations codées (93) du second corps support (103).

4. Dispositif de mesure de position suivant la revendication 1, caractérisé par le fait que les fenêtres (69, 693) sont disposées avec décalage radial et angulaire les unes par rapport aux autres.

5. Dispositif de mesure de position suivant la revendication 1, caractérisé par le fait que le réducteur (11, 113) et la division codée (9, 93) sont accordés de manière qu'à chaque marque de référence (8, 83) susceptible d'être lue à l'aide du dispositif d'exploration (3, 33) est associée une valeur codée individuelle.

6. Dispositif de mesure de position suivant la revendication 1, caractérisé par le fait que sur le premier corps support (6, 63) est disposée une unique marque de référence (8, 83) qui est par conséquent explorée une fois par tour, et qu'après chaque tour complet du premier corps support (6, 63), une nouvelle valeur codée (9, 93) est explorée en fonction du nombre de tours dudit corps support.

7. Dispositif de mesure de position suivant la revendication 1, caractérisé par le fait que l'exploration de la division codée (9, 93) s'effectue de façon sérielle entre deux explorations de marque de référence.

8. Dispositif de mesure de position suivant la revendication 1, caractérisé par le fait que la cadence de lecture est commandée par la marque de référence (8, 83) et la division incrémentale (7, 73).

9. Dispositif de mesure de position suivant la revendication 1, caractérisé par le fait qu'un photoélément (3d) et un canal de signaux sont prévus pour l'exploration de la division codée (9, 93).

# Fig. 1

Fig. 2a

Fig. 2b

Fig. 2c

0 171 612

Fig. 3